# FASCICULE DE BREVET EUROPEEN

(11) **EP 3 592 632 B1**
(45) Date de publication et mention de la délivrance du brevet: **05.10.2022**
(21) Numéro de dépôt: 18710102.7
(22) Date de dépôt: 22.02.2018
(51) Int. Cl.: B62D 31/02

(54) **CHASSIS DE MODULE AUTOPORTEUR**
SELBSTTRAGENDER MODULRAHMEN
SELF-SUPPORTING MODULE FRAME

(30) Priorité: 06.03.2017 FR 1751806
(43) Date de publication de la demande: 15.01.2020
(73) Titulaire: ALSTOM APTIS, 67980 Hangenbieten (FR)
(72) Inventeur: LAMANNA, Franck, 67520 Marlenheim (FR); NARDIN, Pascal, 67000 Strasbourg (FR)
(74) Mandataire: Cabinet Nuss
(86) Numéro de dépôt international: PCT/FR2018/050423
(87) Numéro de publication internationale: WO 2018/162817

(56) Documents cités:
- FR-A1- 2 468 496
- US-A- 3 756 647
- US-B1- 6 183 034
- US-B1- 6 231 115

## Description

La présente invention se rapporte au domaine des châssis de véhicule et plus particulièrement au domaine des châssis destinés à être positionnés en extrémité de véhicule.

Lors de la réalisation d'un habitacle d'extrémité de véhicule et notamment d'une extrémité de tête de véhicule, il est courant de prévoir un châssis équipé de plusieurs ouvertures pour autoriser une visibilité aux passagers de l'habitacle, et notamment au conducteur.

Dans le cadre de la construction d'un châssis de véhicule et notamment d'un habitacle de conducteur, la visibilité du conducteur est obtenue grâce à plusieurs ouvertures équipées de vitres ou pare-brises au niveau des parois périphériques de l'habitacle.

Cependant, à l'extrémité d'un véhicule, les différentes ouvertures au niveau des différentes faces de l'habitacle sont séparées entre elles par des parois de l'habitacle qui portent les ouvertures ou par des éléments de jonction dédiés qui participent à la réunion de vitres ou pare-brises et à la tenue mécanique de la partie supérieure de l'habitacle avec la partie inférieure, notamment au niveau de points de réunion des faces de l'habitacle. De telles jonctions réalisées entre les différentes ouvertures peuvent être relativement importantes et restreindre la visibilité du conducteur de façon conséquente. La publication US 6,183,034 propose une carrosserie antérieure de véhicule sous la forme d'une coque bombée qui permet d'obtenir le positionnement d'un pare-brise semi-circulaire. Cependant, il convient de reconnaitre qu'un tel arrangement demeure essentiellement plan et la profondeur la carrosserie d'extrémité n'est d'au plus que de quelques pouces/centimètres de sorte que la continuité de la visibilité entre une face d'extrémité et une face latérale demeure particulièrement restreinte.

La présente invention a pour but de pallier cet inconvénient en proposant une extrémité de véhicule qui permette l'obtention d'une visibilité optimisée pour un passager ou un conducteur avec notamment une vision continue entre une face d'extrémité et au moins une face latérale du véhicule tout en conservant, au niveau de la structure du véhicule, une résistance mécanique de la partie supérieure de l'habitacle avec la partie inférieure.

A cet effet, l'invention a pour objet un châssis de module autoporteur agencé pour être positionné à une extrémité de véhicule réalisant un habitacle, caractérisé en ce que ce châssis comprend au moins :
- une première structure rigide formant au moins une partie haute de l'habitacle,
- une seconde structure rigide formant au moins une partie basse de l'habitacle,
- au moins un montant structurel vertical de support réalisant une jonction entre la première structure rigide et la seconde structure rigide de l'habitacle, de sorte que la première structure rigide est positionnée en porte-à-faux ou cantilever par rapport à la seconde structure rigide.

L'invention porte également sur un véhicule intégrant au moins un châssis selon l'invention.

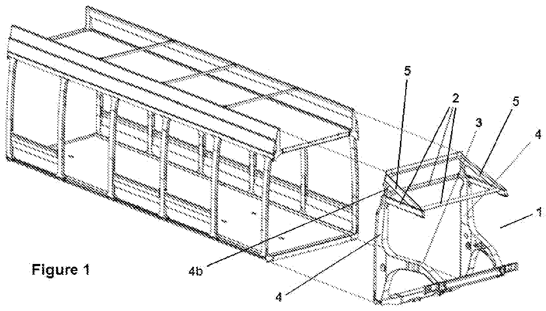

L'invention sera mieux comprise, grâce à la description ci-après, qui se rapporte à au moins un mode de réalisation préféré, donné à titre d'exemple non limitatif, et expliqué avec référence au dessin schématique annexé qui correspond à une représentation schématique d'un exemple de châssis de module selon l'invention destiné être positionné dans un véhicule.

L'invention se rapporte à un châssis 1 de module autoporteur agencé pour être positionné à une extrémité de véhicule réalisant un habitacle, caractérisé en ce que ce châssis 1 comprend au moins :
- une première structure 2 rigide formant au moins une partie haute de l'habitacle,
- une seconde structure 3 rigide formant au moins une partie basse de l'habitacle,
- au moins un montant structurel vertical 4 de support réalisant une jonction entre la première structure rigide 2 et la seconde structure rigide 3 de l'habitacle, de sorte que la première structure rigide 2 est positionnée en porte-à-faux ou cantilever par rapport à la seconde structure rigide 3.

Selon une particularité de construction, le châssis 1 autoporteur peut réaliser une structure de module d'extrémité formant une portion du châssis d'un véhicule et destinée à être associée à un autre module formant une autre portion du châssis de véhicule.

De façon alternative, le châssis 1 de module autoporteur réalise l'intégralité du châssis du véhicule.

Une construction en porte-à-faux ou en cantilever de la première structure 2 par rapport à la seconde structure 3 permet de s'affranchir de limiter le nombre de pièces structurelles verticales de jonction qui réalisent un transfert de forces entre la première 2 et la seconde structure 3. Ce transfert de forces permet de conserver une résistance mécanique, au niveau de la structure du véhicule, entre la première structure 2, partie supérieure de l'habitacle, et la seconde structure 3, partie inférieure de l'habitacle.

Cette restriction du nombre de pièces structurelles permet une libération d'espace au niveau des parois sur la périphérie du châssis 1 formant l'habitacle. Cette libération d'espace permet ainsi l'obtention d'une ouverture continue au niveau de plusieurs faces juxtaposées du châssis.

Selon une particularité de construction, la première structure 2 et la seconde structure 3 sont réalisées dans des plans sensiblement horizontaux de sorte que l'espace libéré entre ces deux structures réalise une ouverture continue orientée horizontalement et disposée au niveau de plusieurs faces juxtaposées.

La première structure 2 rigide réalise préférentiellement un cadre disposé dans un plan sensiblement horizontal et positionné dans une partie haute de l'habitacle. Selon une particularité de construction, cette structure 2 rigide participe à la réalisation d'au moins une partie du plafond de l'habitacle. De façon alternative et/ou complémentaire, le cadre réalisé par la structure 2 rigide forme une interface de fixation pour différents éléments du véhicule.

La seconde structure 3 rigide réalise également, de façon préférentielle, un cadre disposé dans un plan sensiblement horizontal et positionné dans une partie basse de l'habitacle pour former une structure de châssis permettant une fixation de différents éléments du véhicule. Le positionnement en partie basse de la seconde structure 3 rigide peut se rapporter à une position de niveau avec le plancher de l'habitacle. De façon alternative, le positionnement de la seconde structure 3 peut correspondre à une position de niveau avec une assise pour un passager dans l'habitacle. De façon encore alternative, le positionnement de la seconde structure 3 peut correspondre à une position de niveau avec une console de commande ou un tableau de bord.

Selon une particularité de construction, la première structure 2 rigide participe à la réalisation d'au moins une partie du plafond de l'habitacle. De façon alternative et/ou complémentaire, le cadre réalisé par la première structure 2 rigide forme une interface de fixation pour différents éléments du véhicule.

Il convient de noter que la construction de la première structure rigide 2 positionnée en porte-à-faux ou cantilever par rapport à la seconde structure rigide 3 peut être obtenue grâce à un montant structurel vertical 4 unique qui porte seul la première structure rigide 2 pour la positionner au-dessus de la seconde structure 3. Toutefois, ce support et ce positionnement de la première structure rigide 2 peut être réalisé alternativement par deux montants structurels verticaux 4, voire éventuellement par trois montants 4.

Selon une particularité de construction, le châssis 1 comprend au moins deux montants structurels 4, chacun des montants 4 étant destiné à être positionné au niveau d'un des côtés du véhicule. De façon préférée, les montants 4 structurels du châssis 1 sont positionnés au niveau des faces latérales du véhicule tandis que la première structure 2 en porte-à-faux sur la seconde structure 3 est positionnée au niveau de la portion du châssis destinée à être positionnée à l'extrémité du véhicule. La première structure 2 se trouve ainsi positionnée telle une potence par rapport au montant vertical 4 auquel la structure 2 est fixée.

Selon une particularité de construction, le châssis 1 comprenant au moins deux montants structurels 4, les montants structurels 4 sont réalisés par deux branches d'un cadre disposé dans un plan vertical. Selon cette particularité de construction, les montants verticaux 4 réalisent la jonction entre la première structure 2 et la seconde structure 3 positionnée, l'une par rapport à l'autre, en porte-à-faux. Selon une spécificité de cette particularité de construction, le cadre vertical réalisé par ces montants 4 forme une ouverture de l'habitacle entouré par le châssis, de sorte que cette ouverture autorise le passage d'un passager du véhicule. Selon une autre spécificité, le cadre vertical comprenant les montants 4 forme une interface destinée à interagir avec un second module du véhicule.

Le maintien en position de la première structure 2 dans un plan horizontal peut être optimisé grâce à un élément de renfort.

Selon un premier mode de réalisation, cet élément de renfort peut être réalisé au niveau d'une structure de jonction entre la première structure 2 rigide et les montants structurels 4. Le renfort de cette structure de jonction peut être obtenu par une composition de plus grande résistance à la déformation, et notamment à la flexion sous l'effet de la gravité.

Selon un second mode de réalisation, alternatif ou complémentaire du premier mode, l'élément de renfort 5 est réalisé par une structure fixée, au niveau d'une première extrémité, au montant structurel vertical 4 et, au niveau d'une seconde extrémité, à une portion de la première structure 2 rigide qui est distale par rapport au montant structurel vertical 4. Selon une particularité de ce second mode de réalisation, l'élément de renfort 5 est réalisé par un bras monté oblique par rapport au montant vertical et/ou à la première structure 2 rigide. Ainsi, l'élément de renfort 5 est réalisé par un bras rectiligne qui permet de renforcer le maintien en position de la première structure rigide 2 par rapport au montant vertical 4 et en porte-à-faux au-dessus de la seconde structure rigide 3.

Selon une spécificité de construction alternative au bras rectiligne, l'élément de renfort 5 est réalisé sous la forme d'un bras courbe, par exemple de forme hyperbolique.

Selon les contraintes d'espace et d'encombrement existantes, le bras formant l'élément de renfort 5 peut être positionné au-dessus ou en dessous de la première structure rigide 2. Lorsque le bras est positionné au-dessus de la première structure rigide 2, l'extrémité du bras associée au montant vertical 4 est fixée au niveau d'un prolongement 4b du montant vertical 4 qui dépasse au-dessus de la jonction de la première structure rigide 2 avec le montant vertical 4.

L'invention porte également sur un véhicule intégrant au moins un châssis 1 selon l'invention.

Selon une particularité de construction, le châssis 1 est associé à au moins une baie vitrée positionnée entre la première structure 2 rigide et la seconde structure 3 rigide. Il convient de noter que selon une spécificité de cette particularité de construction, le châssis 1 est associé à plusieurs baies vitrées réunies par des éléments de jonction. Ces éléments de jonction ne réalisent aucun rôle structurel pour le maintien en position de la première structure rigide 2 par rapport à la seconde structure rigide 3. En absence de ce rôle structurel, ces éléments de jonction entre éléments vitrés peuvent présenter une épaisseur suffisamment restreinte pour limiter l'obstruction de la visibilité obtenue par le positionnement de la première structure rigide en porte-à-faux.

Selon une particularité complémentaire de construction, le châssis 1 est associé à une baie vitrée entre la première structure 2 rigide et la seconde structure 3 rigide et entre deux montants structurels verticaux 4. Cette baie vitrée peut réaliser une structure continue qui épouse la forme de des cadres de la première structure 2 rigide et de la seconde structure 3 rigide pour réaliser une paroi vitrée continue sur une périphérie du châssis du véhicule.

Bien entendu, l'invention n'est pas limitée au mode de réalisation décrit et représenté au dessin annexé. Des modifications restent possibles, notamment du point de vue de la constitution des divers éléments ou par substitution d'équivalents techniques, sans sortir pour autant du domaine de protection de l'invention tel que défini par les revendications.

## Revendications

1. Châssis (1) de module autoporteur agencé pour être positionné à une extrémité de véhicule réalisant un habitacle, **caractérisé en ce que** ce châssis (1) comprend au moins :
- une première structure (2) rigide formant au moins une partie haute de l'habitacle,
- une seconde structure (3) rigide formant au moins une partie basse de l'habitacle,
et **caractérisé en ce que**:
- au moins un montant structurel vertical (4) de support réalisant une jonction entre la première structure rigide (2) et la seconde structure rigide (3) de l'habitacle, de sorte que la première structure rigide (2) est positionnée en porte-à-faux ou cantilever par rapport à la seconde structure rigide (3).

2. Châssis (1) selon la revendication 1, **caractérisé en ce que** le châssis (1) comprend au moins deux montants structurels (4), chacun des montants (4) étant destiné à être positionné au niveau d'un des côtés du véhicule.

3. Châssis (1) selon une des revendications 1 ou 2, **caractérisé en ce que**, le châssis (1) comprenant au moins deux montants structurels (4), les montants structurels (4) sont réalisés par deux branches d'un cadre disposé dans un plan vertical.

4. Châssis (1) selon une des revendications précédentes, **caractérisé en ce que** la première structure rigide (2) est maintenue en porte-à-faux grâce à au moins un élément de renfort.

5. Châssis (1) selon la revendication 4, **caractérisé en ce que** l'élément de renfort (5) est réalisé par une structure fixée, au niveau d'une première extrémité, au montant structurel vertical (4) et, au niveau d'une seconde extrémité, à une portion de la première structure rigide (2) qui est distale par rapport au montant structurel vertical (4).

6. Châssis (1) selon une des revendications 4 et 5, **caractérisé en ce que** l'élément de renfort (5) est réalisé par un bras monté oblique par rapport au montant vertical et/ou à la première structure rigide (2).

7. Véhicule intégrant au moins un châssis (1) selon une des revendications 1 à 6.

8. Véhicule selon la revendication 7, **caractérisé en ce que** le châssis (1) est associé à au moins une baie vitrée positionnée entre la première structure rigide (2) et la seconde structure rigide (3).

9. Véhicule selon une des revendications 7 ou 8, **caractérisé en ce que** le châssis (1) est associé à une baie vitrée entre la première structure rigide (2) et la seconde structure rigide (3) et entre deux montants structurels verticaux (4).

## Patentansprüche

1. Selbsttragender Modulrahmen (1), der dazu eingerichtet ist, an einem Fahrzeugende positioniert zu sein, und eine Fahrgastzelle ausbildet, **dadurch gekennzeichnet, dass** dieser Rahmen (1) mindestens Folgendes beinhaltet:
- eine erste starre Struktur (2), die mindestens einen oberen Teil der Fahrgastzelle bildet,
- eine zweite starre Struktur (3), die mindestens einen unteren Teil der Fahrgastzelle bildet,
und **dadurch gekennzeichnet, dass**:
- mindestens ein vertikaler struktureller Stützträger (4) eine Verbindung zwischen der ersten starren Struktur (2) und der zweiten starren Struktur (3) der Fahrgastzelle ausbildet, sodass die erste starre Struktur (2) mit Bezug auf die zweite starre Struktur (3) freitragend oder als Ausleger positioniert ist.

2. Rahmen (1) nach Anspruch 1, **dadurch gekennzeichnet, dass** der Rahmen (1) mindestens zwei strukturelle Träger (4) beinhaltet, wobei jeder der Träger (4) dazu bestimmt ist, auf einer der Seiten des Fahrzeugs positioniert zu sein.

3. Rahmen (1) nach einem der Ansprüche 1 oder 2, **dadurch gekennzeichnet, dass** der Rahmen (1) mindestens zwei strukturelle Träger (4) beinhaltet, wobei die strukturellen Träger (4) durch zwei Schenkel eines Gestells, das in einer vertikalen Ebene angeordnet ist, ausgebildet sind.

4. Rahmen (1) nach einem der vorhergehenden Ansprüche, **dadurch gekennzeichnet, dass** die erste starre Struktur (2) mit Hilfe mindestens eines Verstärkungselements freitragend gehalten wird.

5. Rahmen (1) nach Anspruch 4, **dadurch gekennzeichnet, dass** das Verstärkungselement (5) durch eine Struktur ausgebildet ist, die an einem ersten Ende an dem vertikalen strukturellen Träger (4) und an einem zweiten Ende an einem Abschnitt der ersten starren Struktur (2), der mit Bezug auf den vertikalen strukturellen Träger (4) distal gelegen ist, befestigt ist.

6. Rahmen (1) nach einem der Ansprüche 4 und 5, **dadurch gekennzeichnet, dass** das Verstärkungselement (5) durch einen Arm ausgebildet ist, der mit Bezug auf den vertikalen Träger und/oder die erste starre Struktur (2) schräg angebracht ist.

7. Fahrzeug, das mindestens einen Rahmen (1) nach einem der Ansprüche 1 bis 6 umfasst.

8. Fahrzeug nach Anspruch 7, **dadurch gekennzeichnet, dass** der Rahmen (1) mit mindestens einer verglasten Öffnung assoziiert ist, die zwischen der ersten starren Struktur (2) und der zweiten starren Struktur (3) positioniert ist.

9. Fahrzeug nach einem der Ansprüche 7 oder 8, **dadurch gekennzeichnet, dass** der Rahmen (1) mit einer verglasten Öffnung zwischen der ersten starren Struktur (2) und der zweiten starren Struktur (3) und zwischen zwei vertikalen strukturellen Trägern (4) assoziiert ist.

## Claims

1. Self-supporting module chassis (1) arranged to be positioned at a vehicle end producing a vehicle interior, **characterized in that** this chassis (1) comprises at least:
- a first rigid structure (2) forming at least a high part of the vehicle interior,
- a second rigid structure (3) forming at least a low part of the vehicle interior,
and **characterized in that**:
- at least one structural vertical support upright (4) produces a join between the first rigid structure (2) and the second rigid structure (3) of the vehicle interior, such that the first rigid structure (2) is positioned overhanging or cantilevered with respect to the second rigid structure (3).

2. Chassis (1) according to Claim 1, **characterized in that** the chassis (1) comprises at least two structural uprights (4), each of the uprights (4) being intended to be positioned on one of the sides of the vehicle.

3. Chassis (1) according to either of Claims 1 and 2, **characterized in that**, the chassis (1) comprising at least two structural uprights (4), the structural uprights (4) are produced by two branches of a frame disposed in a vertical plane.

4. Chassis (1) according to one of the preceding claims, **characterized in that** the first rigid structure (2) is kept overhanging by virtue of at least one reinforcing element.

5. Chassis (1) according to Claim 4, **characterized in that** the reinforcing element (5) is produced by a structure fixed, at a first end, to the structural vertical upright (4) and, at a second end, to a portion of the first rigid structure (2) which is distal with respect to the structural vertical upright (4).

6. Chassis (1) according to either of Claims 4 and 5, **characterized in that** the reinforcing element (5) is produced by an arm mounted obliquely with respect to the vertical upright and/or to the first rigid structure (2).

7. Vehicle incorporating at least one chassis (1) according to one of Claims 1 to 6.

8. Vehicle according to Claim 7, **characterized in that** the chassis (1) is associated with at least one large window positioned between the first rigid structure (2) and the second rigid structure (3).

9. Vehicle according to either of Claims 7 and 8, **characterized in that** the chassis (1) is associated with a large window between the first rigid structure (2) and the second rigid structure (3) and between two structural vertical uprights (4).
